(19) Europäisches Patentamt
European Patent Office
Office européen des brevets

(11) **EP 2 726 444 B1**

(12) **EUROPEAN PATENT SPECIFICATION**

(45) Date of publication and mention
of the grant of the patent:
**19.10.2016 Bulletin 2016/42**

(51) Int Cl.:
*C07B 59/00* $^{(2006.01)}$    *B01J 19/00* $^{(2006.01)}$

(21) Application number: **12743264.9**

(86) International application number:
**PCT/US2012/044523**

(22) Date of filing: **28.06.2012**

(87) International publication number:
**WO 2013/003528 (03.01.2013 Gazette 2013/01)**

(54) **DEVICES AND METHODS FOR REDUCING RADIOLYSIS OF RADIOLABELED COMPOUNDS**

VORRICHTUNGEN UND VERFAHREN ZUR MINDERUNG DER RADIOLYSE RADIOMARKIERTER VERBINDUNGEN

DISPOSITIFS ET PROCÉDÉS DE RÉDUCTION DE RADIOLYSE DE COMPOSÉS RADIOMARQUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011   US 201113173978**

(43) Date of publication of application:
**07.05.2014   Bulletin 2014/19**

(73) Proprietor: **General Electric Company**
**Schenectady, NY 12345 (US)**

(72) Inventors:
• **RENSCH, Christian Friedrich Peter**
**85748 Garching b. Munchen (DE)**
• **BALLER, Marko Klaus**
**66292 Riegelsberg (DE)**
• **BOELD, Christoph**
**85748 Garching b. Munchen (DE)**
• **SAMPER, Victor Donald**
**85748 Garching b. Munchen (DE)**
• **ULIN, Johan Urban Ingemar**
**S-75 015 Uppsala (SE)**

(74) Representative: **Serjeants LLP**
**Dock**
**75 Exploration Drive**
**Leicester, LE4 5NU (GB)**

(56) References cited:
EP-A1- 1 356 827        EP-A1- 2 119 458
WO-A1-02/18042         WO-A1-2010/101118
WO-A2-03/078358        WO-A2-2005/094982
WO-A2-2006/071470      WO-A2-2008/140616

**Description**

BACKGROUND

The invention relates generally to devices and methods for reducing radiolysis in the production and storage of radiopharmaceuticals. WO 2008/140616 A2 describes a microreactor suitable for performing labeling reactions. The preamble of the independent claims is derivable from this document.

Positron Emission Tomography (PET), together with Single Photon Emission Computed Tomography (SPECT), is a powerful medical imaging technology that is finding use in the expanding molecular imaging field in medical diagnostics and drug discovery.

The application of microfluidics and related technologies for the synthesis of radiopharmaceuticals for Positron Emission Tomography (PET) has gained increasing attention in the scientific community. Benefits such as reduced reaction times, highly efficient reactions, low reagent consumption, reduced system footprint and increased system automation are of high interest and have been demonstrated. Further downscaling is anticipated, especially for radiolabeling reactions that may benefit from high concentrations of one reactant over the other as well as for research studies utilizing cost-intensive precursors.

The downscaling of synthesis reaction volumes for radiopharmaceutical production implies an increase of activity per unit volume and is ultimately limited by radiolysis. Radiolysis, and more specifically autoradiolysis, is the decomposition of molecules at high concentrations of radioactivity over time. As used herein, radiolysis, radiolytic effects and autoradiolysis may be used interchangeably.

Radiolytic effects arise from the ionization and dissociation cascade initiated by the isotope decay event and the positron (beta+) emission. They occur in the range of several millimeters, depending on the utilized isotope and the surrounding media. The direct disintegration and ionization of molecules along the ionization path of the emitted positron may lead to subsequent formation of free reactive species that interfere with the radiopharmaceutical compound of interest. This process reduces the amount of useful radiopharmaceutical molecules and increases the concentration of impurities in the product solution. Radiolysis occurs in all commonly utilized PET radioisotopes such as $^{18}$F, $^{11}$C and $^{68}$Ga, however, autoradiolysis phenomena will vary depending on the respective positron energies for each type of isotopes.

Various national pharmacopoeias stipulate the minimum purity that a radiopharmaceutical product must meet at the time of injection to the patient. For example, $^{18}$F-fluoro-deoxy-glucose ([$^{18}$F]FDG) typically has a minimum specification of greater than or equal to 95% purity; thereby defining the shelf life of the drug. Since such compounds sometimes have to be transferred from a production site to the customer, several techniques have been employed to increase the shelf life time.

To address radiolysis, certain techniques have been used to limit the interaction probability of free radicals with tracer molecules in a bulk solution. The techniques include dilution of the product, scavenging of free radicals by utilizing additives (e.g. ethanol) [Wortmann et al 2001 Nuklearmedizin; 40: A106 (TV9)][Kiselev, M.Y., Tadino, V., inventors, 2006. Eastern Isotopes, Inc., Assignee. Stabilization of Radiopharmaceuticals Labeled with 18-F. United States Patent US 7018614.] or freezing [Wahl et al. "Inhibition of Autoradiolysis of Radiolabeled Monoclonal Antibodies by Cryopreservation"; Journal of Nuclear Medicine Vol. 31 No. 1 84-89] of the solution thus reducing the diffusion of free radicals. However, these techniques represent an additional process step to be integrated into production hence increasing the overall level of synthesis complexity. Furthermore, conventional scavenging and stabilizing methods may not be applicable under all circumstances for existing and future radiopharmaceutical compounds, chemistry methods utilized during synthesis and purification as well as fluid volumes and activity concentrations.

Therefore an approach which reduces the radiolytic effects of radiopharmaceutical compounds without the use of additives through production and storage is desirable. Such an approach may include the reduction of autoradiolysis of radiopharmaceutical compounds by partial geometric reduction of the positron emission induced ionization and decomposition effects. Thus designing a device or method providing fluid confinement for the production or storage of radiopharmaceutical compounds, wherein the geometric arrangement has a characteristic dimension below the beta+ / beta- energy dissipation range may provide a means of increasing synthesis efficiency in terms of radiochemical purity and the shelf life and efficacy of radiopharmaceutical compounds.

BRIEF DESCRIPTION

In one aspect, the present invention relates to a device for containing radioisotopes as defined by claim 1.

In another aspect, the present invention relates to methods of storing and synthesizing radiopharmaceuticals as defined by claims 14 and 15.

## BRIEF DESCRIPTION OF THE FIGURES

These and other features, aspects, and advantages of the present invention will become better understood when the following detailed description is read with reference to the accompanying figures wherein:

FIG. 1 is an illustration of a top view of a microfluidic meander-shaped storage/reaction container of the present invention with channel size 500$\mu$m x 500$\mu$m, 250$\mu$m edge-to-edge spacing.

FIG. 2 shows experimental results for positron interaction between adjacent channels on a microfluidic chip, such as shown in FIG. 1, utilizing [$^{18}$F]FDG (non-stabilized) at 14.9 - 23.1 GBq/ml compared to a shielded PEEK capillary.

FIG. 3 is a graphical representation of the cumulative probability distribution T(x) for positron annihilation events in water.

FIG. 4 is a graphical representation of fraction of deposited Energy $E_{absorb}$(r) for positrons in water.

FIG. 5 is a black and white reproduction of a 250$\mu$m ID PEEK capillary helically wrapped along threaded steel shaft for complete shielding of capillary and suppression of positron interaction between adjacent capillary convolutions.

FIG.6 is a graphical representation of mean path length as a function of radius for cylindrical geometries.

FIG. 7 is a schematic example of a planar reactor with outer dimensions a, b, and thickness c.

FIG. 8 is a graphical representation of mean path length in a planar geometry according to FIG. 7 as a function of the structure thickness c.

FIG. 9 is a graphical representation comparing fractional deposited energy inside a cylindrical versus a planar structure for varying characteristic dimensions (radius for a cylinder and thickness for a planar configuration).

FIG. 10 is an illustration of the experimental set-up used.

FIG. 11 graphically shows autoradiolysis versus capillary diameter.

FIG. 12 shows the autoradiolysis suppression in ID 250$\mu$m PEEK capillary vs. activity concentration whereas yields show no significant correlation with the activity concentrations utilized during the experiment.

## DETAILED DESCRIPTION

The following detailed description is exemplary and not intended to limit the invention of the application and uses of the invention. Furthermore, there is no intention to be limited by any theory presented in the preceding background of the invention or descriptions of the drawings.

Positron Emission Tomography (PET), together with Single Photon Emission Computed Tomography (SPECT), is a powerful medical imaging technology that is building the foundation of a rapidly expanding field of molecular imaging in medical diagnostics and drug discovery. As such, there has been a growing body of research in the area of microfluidic synthesis of PET tracers. In addition to the promise of higher reaction yields and improved process control, microfluidics has the potential to reduce the infrastructure burden of PET by reducing the overall size and shielding of tracer synthesizers.

The scale-down of radiochemistry from typical reaction volumes in the area of approx. 1000 $\mu$l, to micro reactors of approximately 100 $\mu$l or smaller, leads to higher concentrations of activity if a single synthesis batch is to produce the same amount of patient doses as the conventional equivalent process. However, it is known that with an increase of activity concentration, there is also a decrease in product yield and purity. For example, in a conventional scale reactor with a diameter of ca. 10mm and a volume of 10 ml, approximately 99% of the positrons' energy is dissipated in the liquid matter inside the reactor in a process that can lead to radiolysis.

Further with respect to microfluidics, autoradiolysis, which is created by interaction of radical species, may be reduced by surface modifications to getter radicals that lead to a permanent or temporary capturing/binding of radicals to a surface. Due to short diffusion lengths for particles in micro-channels, the probability of a radical reaching the wall of a capillary tube or a microfluidic structure before interacting with a radiolabeled molecule of interest is higher than compared to a conventional vessel. Therefore, controlling variations in geometry and scale may alter the positron's degree of interaction with the reactor contents as well as the interaction of radical species induced by positron energy dissipation, and thus impact the radiolysis process. Thus the design of the fluid confining geometry for reactor vessels, purification, or storage devices may enable increase output activities and more effective production systems at increased product shelf life capabilities.

The invention relates generally to a microfluidic reactor or storage vessels comprising fluid or fluid guiding elements wherein the guiding elements or fluid confining geometries have dimensions below the maximum beta+ and beta-interaction range of emitting radioisotopes, which may be contained within the elements. The invention also contemplates that the guiding elements or fluid confining geometries have dimensions below the average beta+ and beta-interaction range of emitting radioisotopes, and more desirably at about 10-15 of the maximum beta+ and beta- interaction range of emitting radioisotopes, which may be contained within the elements. Beta decay is a type of radioactive decay in which a beta particle, an electron or a positron, is emitted. Beta+ ($\beta$+) emission refers to positron emission; electron emission is referred to as beta- ($\beta$-) emission. The geometry of the elements may reduce autoradiolysis or radiolytic effects. Radiolytic effects or autoradiolysis include positron emission induced direct disruption of molecules as well as radical species creation and side product formation.

In certain embodiments, the microfluidic reactor or storage vessel is used for the production and storage of beta+ and beta- emitting isotopes including, but not limited to those used in nuclear medicine for diagnostics, such as PET, SPECT, and nuclear therapy. Such isotopes include $^{18}F$, $^{11}C$, $^{14}C$, $^{99m}Tc$, $^{123}I$, $^{125}I$, $^{131}I$, $^{68}Ga$, $^{67}Ga$, $^{15}O$, $^{13}N$, $^{82}Rb$, $^{62}Cu$, $^{32}P$, $^{89}Sr$, $^{153}Sm$, $^{186}Re$, $^{201}Tl$, $^{111}In$, or combinations thereof. Preferred isotopes include those used for PET such as $^{18}F$, $^{11}C$ and $^{68}Ga$.

In certain embodiments, the geometries of the microfluidic reactor or storage vessel include a confining geometry, such as a channels or channel-like assemblies, and may refer to a capillary, trench or groove like structure through which a fluid may flow. The terms "confining geometry" and "channel" are used interchangeably. The channel may be defined in terms of its cross-sectional dimension or depth as well as the overall length of the channel. The cross-section and length may vary to provide an internal volume based on the application. In certain applications, the channel may be cylindrical or cubic shape. In certain applications the volume of the microfluidic vessel may be between approximately 0.01 to 10000 $\mu$l. In other embodiments, the volume of the vessel may be between approximately 1 to 1000 $\mu$l.

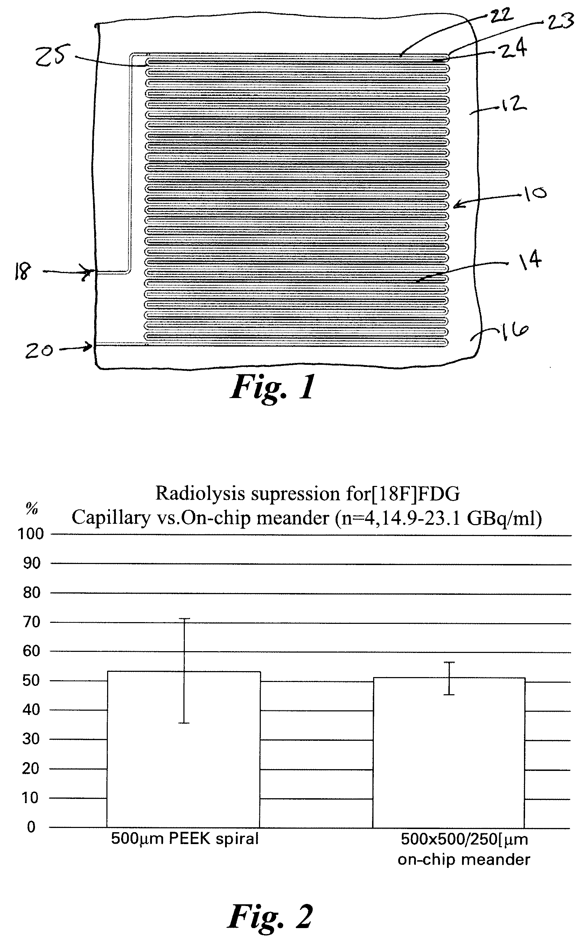

Furthermore, the channel may be arranged in non-linear geometric patterns to allow for packing efficiencies. In certain embodiments, the geometry may comprise meander-shaped, planar rectangular or coin-shaped structures or combinations thereof, wherein the characteristic dimensions are below the positron range of the encapsulated fluid containing the radioisotope. Referring now to FIG. 1, the present invention provides the confinement geometry taking the form of a meandering fluid path 10. Fluid path 10 may be formed as a two-piece device having a planar COC 6017-SO4 substrate body 12 which defines an elongate flow channel 14 opening on a first major surface 16 thereof. A planar cover piece (not shown) can then be bonded to overlay most or all of flow channel 14 so as to provide an enclosed fluid path 10. Fluid path 10 extends between a first inlet end 18 and a second outlet end 20. Fluid path 10 is shaped to form a series of elongate linear segments (eg, 22 and 24) in fluid communication with alternating bending segments (23 and 25). Flow channel 14 is typically includes a square or rectangular cross-section such that one of the dimensions of the cross-section is less than the beta(+) or beta(-) range of a radioisotope to flow therethrough. For example, flow channel 14 may have a cross-sectional dimension of 500$\mu$m x 500$\mu$m where elongate segments 22 and 24 have an edge-to-edge spacing of 250$\mu$m Alternatively, fluid path 10 may be formed by an elongate elastomeric cylindrical tubing of dimensions having a circular cross-section less than beta(+) or beta(-) range of a radioisotope to flow therethrough and laid in an undulating shape between its inlet and outlet ends. The present invention further contemplates that channel 14 may have a rectangular, triangular or circular cross-section, or combinations thereof. Moreover, the present invention contemplates that channel 14 is contemplated to provide a region where mixing or other reactions may take place or where a fluid product may be stored.

The fluid confining geometries may also be described in terms of channel segments, wherein a segment refers to a repeating pattern, for example in a spiral configuration the segments may be rings of concentric circles or helixes while in a meandering arrangement, the segments may be either repeating units of a looping structure or parallel units of linear segments separated by alternating bends (as shown in FIG. 1). Spacing of the segments may therefore be referred to as the edge-to-edge distance between one channel segment and its nearest adjacent neighbor. Spacing of the segments of a helically-wound tube may be referred to as the distance between the tube segments or the shortest distance between the fluid channels of the adjacent segments.

The channels comprise a proximal end and a distal end to allow fluid movement. In other embodiments, the channel may comprise a single opening wherein fluid transfer into and out of the vessel occurs through the same opening. Dimensions are dependent on the emitted beta+/beta- energy of the utilized radioisotope during decay and the resulting maximum beta+/beta- range. For example, for $^{18}F$, the maximum range for the positrons emitted in water is 2.3mm. Therefore embodiments for the reactor or storage vessel may comprise geometric arrangements with a characteristic size below 2.3 mm for use with $^{18}F$.

In still other embodiments of the present invention the fluid confining geometries maybe defined by the fluid volume itself such as droplets or fluidic segments with characteristic dimension below the beta+/beta- range of radioisotopes in use. These fluid confinements, which act to encapsulate the radioisotopes, may be inside of another fluid with different viscosity e.g. oil or a solid substrate wherein segmentation may be attributed to surface tension of the encapsulating fluid. Examples are segmented-flow of digital microfluidics arrangements.

In other embodiments the fluid confining geometric structures are realized utilizing standard capillary tubes such as PEEK, PTFE, PE or similar capillaries with an inner radius with a characteristic dimension below the beta+/beta- range of radioisotopes in use.

In other embodiments the fluid confining geometry maybe a sponge-like or porous substrate with inner channels, chambers, conduits or fluid confinements with a characteristic dimension below the beta+/beta- range of radioisotopes in use.

In other embodiments the fluid confining geometric structure maybe a thin film or surface coating with at least one characteristic dimension below the beta+ / beta- range of radioisotopes in use.

In other embodiments, the characteristic dimensions of the fluid confining geometric structures for fluid conduits, reactors or storage vessels may be defined based on the specific beta+/beta- emitters in use. This is shown but not limited to the values displayed in Table 1, which list maximum and average range of positrons in water for several common medical isotopes. The present invention contemplates that the channel (or confining geometry) should have a dimension that is smaller than the maximum range. More desirably the channel should have a dimension that is smaller than the average range. More desirably still the channel should have a dimension of about 10-15% of the maximum range.

Table 1: Maximum and average range of positrons in water for common medical isotopes

| Radionuclide | Range in water [cm] | Average range in water [cm] |
| --- | --- | --- |
| C-11 | 0.39 | 0.103 |
| C-14 | 0.028 | 0.013 |
| N-13 | 0.51 | 0.132 |
| 0-15 | 0.8 | 0.201 |
| F-18 | 0.23 | 0.064 |
| P-32 | 0.785 | 0.198 |
| Rb-82 | 1.65 | 0.429 |

In certain embodiments, the microfluidic reactor or storage vessel comprising fluid or fluid guiding geometric elements such as mini- or microfluidic channels with a characteristic dimension. A reactor or storage vessel may have a channel width in the range of about 0.01 $\mu$m to 3000 $\mu$m and in another embodiment the channel depth may range from about 1 $\mu$m to 2000 $\mu$m. It is understood that the channel cross-section may be essentially cylindrical, oval or rectangular in shape or combinations thereof. The length of the channel is arbitrary in that it is chosen based on required volume capacity or flow.

The channels may be positioned as to provide a high packaging density. In certain embodiments, meander-shaped or helically-wrapped geometric structures with high packaging density, low space consumption, may be used. As such, geometries of the microfluidic reactor or storage vessel may include capillaries and capillary-like assemblies such as cylindrical or cubic shapes as well as microfluidic geometries with meander-shaped, planar rectangular, coin-shaped structures or combinations thereof.

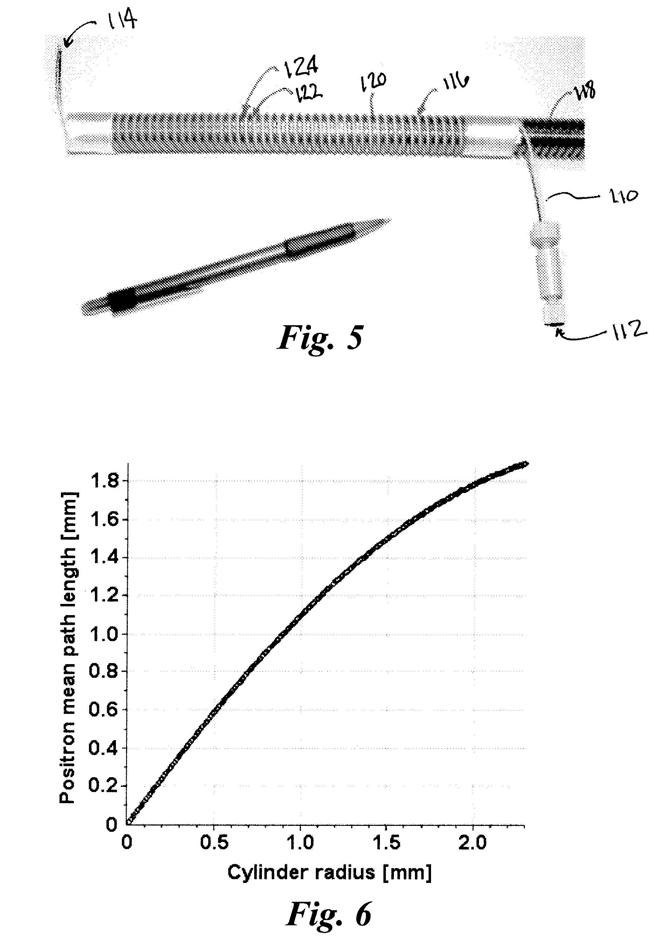

In designing for low space consumptions, positron emission and interaction to adjacent channels must be considered. For example, re-entering probabilities and energies for positrons emitted by 18-fluoride decay to adjacent channels has been calculated and estimated to show a small to negligible effect (Table 2). The results have been experimentally validated utilizing a helically-wrapped shielded capillary setup (re-entering suppressed by appropriate shielding) as shown in FIG. 5, and an on-chip meander structure (channel: 500$\mu$m x 500$\mu$m, 250$\mu$m spacing, material: COC 6017-SO4, illustrated in FIG. 1) with no measurable difference in results between the two configurations as shown graphically in FIG. 2. More specifically, as shown in FIG. 2, there is no significant difference in autoradiolysis between the two systems; hence the results suggest that there is no significant positron interaction between adjacent channels in a meander-shaped microfluidic reactor with the present configuration.

| Channel width [μm] | Channel height [μm] | Channel Spacing [μm] | Channel Volume [μl] | Nr. of parallel channels | Rel. Energy increase [%] | Total energy flux [%] |
|---|---|---|---|---|---|---|
| 250 | 500 | 250 | 200 | 56 | +1.4 | 34.5 |
| 250 | 250 | 150 | 200 | 88 | +1.5 | 29.7 |
| 500 | 500 | 250 | 200 | 32 | +1.3 | 49.0 |
| 250 | 250 | 250 | 200 | 80 | +1.0 | 29.7 |
| 250 | 250 | 500 | 200 | 66 | +0.4 | 29.1 |
| 750 | 750 | 500 | 200 | 17 | +0.5 | 62.1 |
| 500 | 500 | 500 | 200 | 28 | +0,.6 | 48.3 |
| 500 | 500 | 750 | 200 | 14 | +0.2 | 47.9 |

Table 2: Interaction between adjacent geometric structures carrying radioactive compounds on the example of planar meander structures (FIG.1)

Even though impact of positron interaction between adjacent structures has shown no significant impact for 18-fluoride with activity concentrations between 4.3 and 23.1 GBq/ml, in certain embodiments, shielding between adjacent fluid confining geometries may be of interest for beta+ / beta- radiation with higher energies than $^{18}$F or for activity concentrations higher than the evaluated amounts.

As such, in certain embodiments, the fluid confining geometry is configured such that the whole geometry or a given segment of the geometry is substantially isolated from its nearest neighbor or neighbor segment such that no measurable kinetic positron energy transfer occurs between the fluid confining geometries or segments. Measurable positron energy transfer between channels refers to a shift in overall autoradiolysis suppression towards decreased values for decreasing channel spacing.

In certain embodiments a substrate material utilizing heavy materials that lead to high positron absorption and decrease the mean path length of positrons may be used. Materials for use in shielding includes usually solid or liquid materials of high density or mass or both, such as but not limited to lead, tungsten, epoxy and material combinations involving elements that lead to high beta+/beta- range damping or absorbance.

In certain embodiments shielding between adjacent fluid confining geometric structures may be achieved with absorbing material inserts between these structures. In other embodiments, design of adjacent or intermediate compensation structures such as channels or cavities filled with water or other fluids that lead to positron path length reduction or scattering may be used to reduce autoradiolysis induced between neighbor structures (ie, channel may be formed by a capillary tube which is itself placed in a fluid channel of a larger structure). The same shielding fluids may be utilized for heating and cooling of the structures that carry/transport the radioactive and non-radioactive reagents.

In certain embodiments, the reactor vessel is replaced by a segmented flow type arrangement for use with fluid volumes on the order of microliters to picoliters. In such embodiments, the outer dimensions of the respective droplets and the distance between these droplets define the characteristic dimensions for autoradiolysis reduction. In certain other embodiments, the reactor vessel is replaced by solid phase based surface chemistries. Solid phase based surface chemistries include, but is not limited to, chemistry on a frit or a functional surface, floating liquid films, interfacial chemistries and other assemblies wherein a thin layer of the radioactive compound may be included. In such embodiments the thin film shows characteristic dimensions below the beta+/beta- interaction range which leads to autoradiolysis reduction.

In certain embodiments, the reactor vessel may be used for the preparation of radiopharmaceuticals. The method may comprise adding a mixture of a radiotracer and a pharmaceutical carrier to the reactor. The mixture would be added and allowed to flow through the channels of the reactor and collected. The reactor would be designed such that the volume of the channel is controlled to provide adequate mixing or reaction time. The radiotracer may be a compound containing radioisotopes such as $^{18}F$, $^{11}C$, $^{14}C$, $^{99m}Tc$, $^{123}I$, $^{125}I$,$^{131}I$, $^{68}Ga$, $^{67}Ga$, $^{15}O$, $^{13}N$, $^{82}Rb$, $^{62}Cu$, $^{32}P$, $^{89}Sr$, $^{153}Sm$, $^{186}Re$, $^{201}Tl$, $^{111}In$, or combinations thereof. Preferred isotopes include those used for PET such as $^{18}F$, $^{11}C$ and $^{68}Ga$.

The pharmaceutical carrier refers to a composition which allows the application of the agent material to the site of the application, surrounding tissues, or prepared tissue section to allow the agent to have an effective residence time for specific binding to the target or to provide a convenient manner of release. The carrier may include a diluent, solvent or an agent to increase the effectiveness of the radiopharmaceutical produced. As such the carrier may also allow for pH adjustments, salt formation, formation of ionizable compounds, use of co-solvents, complexation, surfactants and micelles, emulsions and micro-emulsions. The pharmaceutical carrier may include, but is not limited to, a solubilizer including water, detergent, buffer solution, stabilizers, and preservatives.

In certain embodiments, the device may be used for storage of radiopharmaceuticals and may increase shelf-life times due to reduced autoradiolytic effects and formation of impurities. The device may be the reactor vessel itself or a separate device. For example, the storage device may be part of a microfluidic assembly or chip.

In other embodiments, the storage device is a separate container wherein the container comprises a fluid confining geometric structure with characteristic dimensions below the positron interaction range of radioisotopes in use, e.g. a capillary or planer structure. In still other embodiments, the container may comprise a sponge-like structures, wrapped structures, or pellets.

In certain embodiments, the storage device may further comprise a device for transferring the radioisotopes. For example, the storage device may be designed such that in may be inserted into a syringe or another element that can be pressurized and used for transferring the stored radioisotopes. In certain embodiments, the storage device may be part of an assembly which is loaded and unloaded utilizing high gas or fluid pressure,

MODELING STUDIES

$^{18}F$ decays in 97% of cases to $^{18}O$ via $\beta^+$ and $v_e$ emission and in 3% of cases via electron capture (Cherry S, Sorenson J, Phelps M, Physics in Nuclear Medicine, Saunders (2003)). During a $\beta^+$ decay event, a proton decays into a neutron, a positron, and a neutrino, with the difference between the binding energy and the energy converted into mass, shared between the kinetic energy of the positron and the neutrino and, less often, a photon. Neutrinos interfere only very weakly with surrounding matter, and it is reasonable to ignore their effects in the autoradiolysis process, just as it is justifiable to neglect the statistically less likely decay process of $^{18}F$ electron capture. In contrast, a positron of high energy is relevant as it can directly lead to a chain of ionization events in the process of dissipating its kinetic energy.

An intact [$^{18}F$]FDG molecule can lose the $^{18}F$ atom if it is ionized directly by a positron or hit by a radical that causes charge transfer between the two particles. At activity concentrations of <20 GBq/ml [$^{18}F$]FDG in water, the probability of a positron ionizing intact [$^{18}F$]FDG molecules directly is estimated as <1% based on molar concentrations of active compounds versus water molecules. For this reason, the dominant mechanism for autoradiolysis is the interaction of radical species with intact [$^{18}F$]FDG molecules. Buriova et al. have reported that the post-autoradiolytic HPLC-MS and TLC analysis showed that OH and $O_2$ are the two species that are most likely to cause $^{18}F$ release (Buriova E. et al., Journal of Radioanalytical and Nuclear Chemistry, Vol 264 No 3 (2005) 595-602). Such reactions, if occurring with enough kinetic energy, lead to electron exchange and subsequent breaking of e.g. $^{18}F$ bonds. Hence, autoradiolysis can be characterized based on the radiochemical purity (RCP) of a radiotracer solution which is determined by measurements of free $^{18}F$ versus intact [$^{18}F$]FDG molecules utilizing thin layer chromatography (TLC) or high pressure liquid chromatography (HPLC) coupled with a radiation detector (radio-HPLC).

The energy spectrum of the $^{18}F$ decay has been studied and the kinetic energies of the positron have been determined to be $E_{max}$ = 0, 633 $MeV$ and a mean energy $E_{mean} \approx \frac{1}{3} E_{max} = 0,211 \ MeV$. After the release of the positron, its kinetic energy is dissipated via ionization, inelastic excitation, and positronium formation which after annihilation subsequently leads to the release of two γ photons, each with an energy of $E_\gamma$ = 511 *keV*. The distance in water where 90% of this γ radiation is deposited is approx. 24cm which is much larger than the discussed geometries for reactor design <2cm. Thus, the contribution of 511KeV γ radiation to ionization can be neglected in the autoradiolysis model. Furthermore, for positrons with kinetic energies of the $^{18}$F decay spectrum the energy losses due to radiation processes are negligible (Cherry S, Sorenson J, Phelps M, Physics in Nuclear Medicine, Saunders (2003)).

The energy transferred to the $^{18}$O daughter nucleus due to momentum conservation after a positron release, including relativistic considerations, has a maximum of approximately 31 eV since the mass ratio of a positron to an $^{18}$O atom is ~$10^5$. Lapp and Andrews reported the mean ionization energy for water as 68 eV and the lowest ionization energy as 11.8 eV (Lapp, Andrews, Nuclear Radiation Physics, Prentice Hall, 1972, p. 154). This means that the recoil effect of positron emission on the daughter nucleus with max. 31 eV has negligible effect on autoradiolysis when compared to the direct effect of the positron which has an average energy in the range of 230000 eV.

It is assumed that the fraction *H(r)* of the total energy lost by the positron each time it collides and ionizes is approximately constant for all distances *r* from the daughter nucleus. Furthermore, it is assumed that the number of ions produced is proportional to the energy lost as ionization energy, and that the number of $^{18}$F atoms released correlates linearly on the number of positron-generated radicals in solution. Ionization energy is hereby defined as the energy that is lost by a positron during ionization of an atom. In general, not all the positron energy is lost to overcome the binding energy of an electron but it may also be lost in secondary processes such as photon emission or as kinetic energy transferred to the emitted electron.

The model developed for the estimation of autoradiolysis effects in small geometries is based upon energy conservation considerations and represents the worst case scenario. This means that due to the assumptions made in (2.) the measured autoradiolysis should not exceed the values predicted by the model. All calculations refer to $^{18}$F decay and the corresponding positron energy levels.

When the number of ions $N_{ions}$ produced is proportional to the deposited ionization energy, then $N_{ions}$ can be calculated as:

$$N_{ions}(r) \propto H(r) \cdot E_{absorb}(r), \quad (1)$$

where *H(r)* is the fraction of energy lost due to ionization for a constant distance r and $E_{absorb}(r)$ is the total energy deposited up to distance r. The results of Palmer and Brownell have been used for the estimation of the fraction of total deposited energy in the system (Palmer and Brownell, 1992 IEEE Trans. Med. Imaging 11, 373-8). Palmer et al. have reported that the 3D distributions of the positron annihilation events can be interpolated by the Gaussian function

$$P(r) = \frac{1}{\sigma\sqrt{2}\Phi\left(\frac{r_0}{\sigma\sqrt{2}}\right) + \sigma\sqrt{\frac{\pi}{2}}} \exp\left(-\frac{(r-r_0)^2}{2\sigma^2}\right). \quad (2)$$

Parameters $r_0$ and σ, obtained by Gaussian fittings, have been reported for different isotopes. In order for *P(r)* to be the probability density, the normalization function Φ is introduced and defined as:

$$\Phi(u) = \int_0^u e^{-x^2} dx. \quad (3)$$

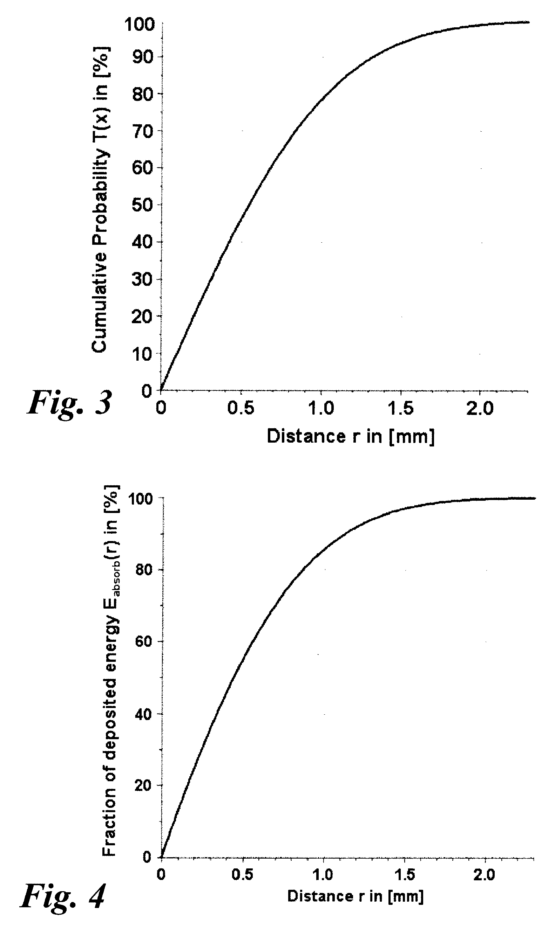

It has been shown by Champion et al. that for $^{18}$F decay $r_0$ = 0,04 *mm* and σ = 0,789 *mm* for water as the decay event surrounding medium (Champion C, Le Loirec C, Phys.Med.Biol. 52 (2007), 6605-6625). Using these fit parameters the cumulative positron annihilation probability curve, defined as

$$T(x) = \int_0^x P(r) dr, \quad (4)$$

is shown in FIG.3. This curve yields the probability that a positron from the $^{18}$F spectrum annihilates up to a certain distance x.

FIG. 3 suggests that approximately 80% of positrons annihilate after passing through a 1 mm thick layer of water. This result corresponds well with Monte Carlo simulation values reported by Champion et al. (76%) and Alessio et al. (79%) (Champion C, Le Loirec C, Phys.Med.Biol. 52 (2007), 6605-6625 and Alessio A., MacDonald L., Nuclear Symposium Conference Record, 2008)).

The range-energy relations for positrons and electrons have been broadly studied and the results from Katz and Penfold demonstrate that there is an empirical relation between the energy and the range (Katz L, Penfold A.S, Rev.Mod. Phys. 24, 28(1952)).

For the transmission of a mono-energetic $\beta$ particle beam in aluminum with an energy $E_0$, where $0,01\ MeV \leq E_0 \leq 2,5\ MeV$, the following empirical relation has been postulated:

$$R(E') = 412 \cdot E'^{1,265 - 0,0954\,\ln(E')}, \quad (5)$$

where the range $R(E)$ is expressed in $(mg/cm^2)$ whereas E' is dimensionless, given by $E' = \frac{E}{MeV}$. Using this relationship, the range in a specific matter can be calculated by dividing the range $R(E')$ by the density of the matter:

$$Range(E') = \frac{R(E')}{\rho}. (6)$$

The empirical energy-range relation (5) can transform the cumulative annihilation probability distribution $T(x)$ in (4), into a function that shows the fraction of total energy deposited $E_{absorb}(r)$ up to the distance $r$ from the daughter nucleus. In a more general form:

$$E_{absorb}(r) = T(r) \cdot Range^{-1}(r), \quad (7)$$

where $T(r) = \int_0^r P(u)du$ is the annihilation probability and $Range^{-1}$ denotes the inverse function of $Range(E)$.

A rigorous derivation of equation (7) should consider backscattering, however, the work of Kobetich and Katz justify that backscattering can be neglected in this case (Kobetich R., Katz L., Physical Review, Vol 170 No 2, 1968).

The normalized dissipation energy curve for positrons in water based on (7) is shown in FIG. 4. Water is chosen as the medium since injectable radiopharmaceuticals are usually aqueous solutions.

It can be seen from the FIG. 4 that about 85% of the positrons kinetic energy is deposited in the first 1 mm of the surrounding water and only 13% within the first 100$\mu$m. Following the assumption that the autoradiolysis phenomena is linearly proportional to the number of ions in solution, and that the number of ions created is proportional to the amount of energy deposited in the system as ionization energy $E_{absorb}(r)$ (see 2.), the results displayed in FIG. 5 suggest that autoradiolysis effects can be reduced to approximately 30% by tailoring the reactor geometry to $\lambda_{path}$ = 250 $\mu m$. This means a reduction by 70% in comparison to conventional glass vessels or bulk reactors where the mean path length is approximately equal to the positron's range $\lambda_{path} \approx R$ with R = 2.3mm for $^{18}$F.

APPLICATION TO CYLINDRICAL AND PLANAR SYSTEMS

A general cylindrical system suitable for analysis with the previously developed model is described by a cylinder with length $L$ and radius $r$, such that $L >> r$. This approximation allows end-effects to be neglected. A further constraint for model applicability is that the cylinder is shielded or otherwise configured in a way such that a positron leaving the cylinder cannot reenter at another location. An embodiment of such a shielded cylinder is displayed in FIG. 5. FIG. 5 illustrates a confinement geometry in the form of a PEEK capillary 110 wrapped along a helical groove 116 of a threaded stainless steel shaft 118. The thickness of the helical thread 120 which defines groove 116 provides a constant shielding for each convolution of capillary 110. For example, thread 120 may provide a spacing for each convolution of 2.1mm, although for stainless steel it has been found that. A 0.5mm spacing is sufficient for a capillary 110 having an interior flow path diameter of 250$\mu$m. Shielding is also available from the material of capillary 110 itself. Capillary 110 extends between an open inlet 112 and an open outlet 114, although both inlet 112 and outlet 114 may simply be locations along a further continuing capillary tube. Capillary 110 thus forms adjacent helical segments 122 and 124 which serially align along groove 116. Additionally, the helical capillary 110 is contemplated to provide a region where mixing or other reactions may take place or where a fluid product may be stored.

The mean path length is hereby defined as the average distance of a positron traveling inside a given configuration of geometric boundaries such as a cylinder or a planar structure, taking multiple starting positions and directions in a three dimensional geometry into account. The mean path length correlates with the energy dissipated inside a geometric configuration. Hence, the mean path length represents the link between the autoradiolysis model of positron energy dissipation (FIG. 4) and the actual geometric configuration explored.

To calculate the mean path length as a function of the cylinder's radius for positrons emitted during $^{18}F$ decay and their respective energy distribution and range, a Monte Carlo simulation was executed with 100,000 positrons for each cylinder radius varying between 0 to 2.3mm. The result of the simulation is displayed in FIG. 6.

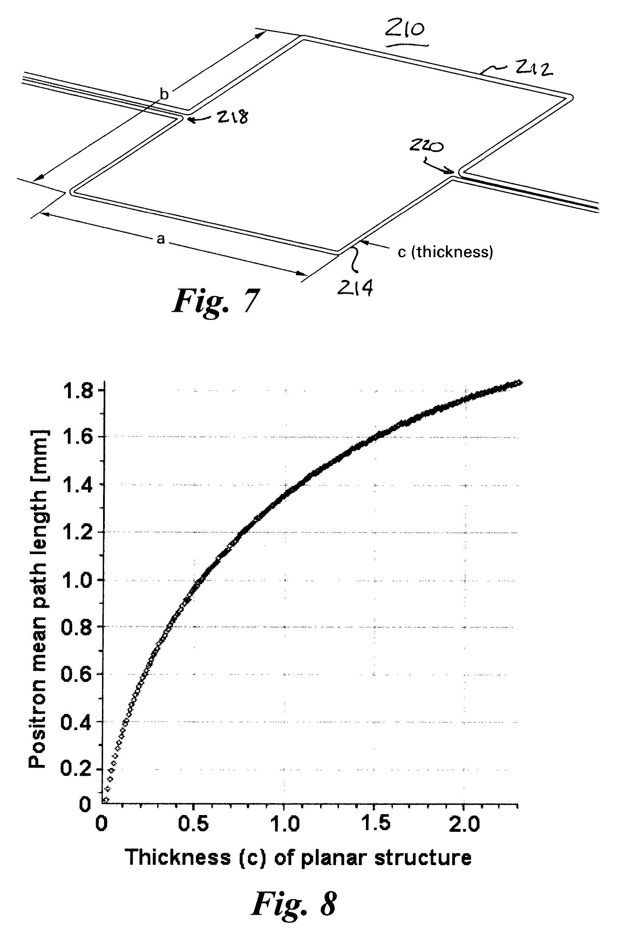

Referring now to FIG. 7, the present invention also provides a reactor 210 formed between two thin sheets.(not shown). Reactor 210 is contemplated to provide a region where mixing or other reactions may take place or where a fluid product may be stored. The sheets are separated by a spacer 212 and 214 bonded thereto and which define a reaction chamber 216 extending between an inlet 218 and an outlet 220. Reaction chamber 216, inlet 218 and outlet 220 are thus enclosed by the two sheets between which spacers 212 and 214 extend, such that inlet 218 and outlet 220 are placeable in fluid communication with a fluid network (not shown). For reference, as shown in FIG. 7, *a* being the length, *b* the width and c the distance between the bottom and top sheets of the reactor 210, such that $a \gg c$, $b \gg c$, and *c* is desirably less than the maximum beta(+) or beta(-) range of a radioisotope flowed into reaction chamber 216. The mean path for reactor 210 was also examined utilizing a Monte Carlo simulation. For each distance between the sheets, the simulation has been run with 100,000 positrons and the results are displayed in FIG. 8. Circular embodiments instead of the present rectangular example are expected to show similar results for energy deposition and resulting autoradiolysis.

With the positron mean path lengths for the cylindrical (FIG. 6) and planar (FIG. 8) configurations determined, the fraction of kinetic positron energy deposited into a fluid inside these geometric configurations can be calculated according to (7). Characteristic dimensions are the radius r for the cylinder and the thickness c for the planar geometry. The results are displayed in FIG.6. The maximum characteristic dimension where $E_{absorb}=100\%$ was set to r=c=2.7mm for both configurations.

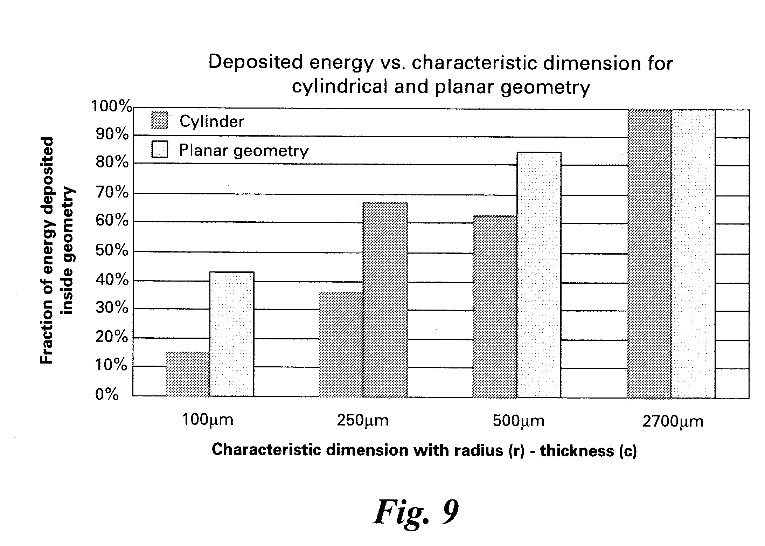

The results show that both geometric arrangements can be used for autoradiolysis reduction, if the characteristic dimensions are chosen small enough. With the assumption of $N_{ions} \propto E_{absorb}$ the results in FIG. 9 suggest that a cylindrical capillary with radius $r = 250\ \mu m$ results in a comparative level of autoradiolysis not exceeding 36% of that found in the bulk reactor configuration (eg, when held in bulk in a standard laboratory vial having a vial cavity diameter of 3mm or greater) with the bulk vial cavity having an interior radius of 2.7mm. Furthermore it can be concluded that cylindrical-like systems offer a higher potential for autoradiolysis reduction than planar shapes. In contrast, planar structures offer an increased packaging density and lower absolute internal surface area, both being potentially important parameters during system design.

The model assumes that a positron loses a constant fraction of its instantaneous kinetic energy due to ionization, independent of the distance to the decaying atom. Upon first inspection, this approximation seems to be bold, since the total ionization cross-section for positrons in water is a complex function of the kinetic energy. The claim can be justified by considering not only the ionization cross-section but also cross-sections associated with the dissipative processes of inelastic excitations and positronium formation. Using the results of Champion et al. it can be shown that for positron energies >1 keV, the ionization fractional cross-section is almost constant at ~80% (Champion C, Le Loirec C, Phys.Med.Biol. 52 (2007), 6605-6625).

EXPERIMENTAL

Materials & Methods:

The autoradiolysis trends predicted by the theoretical model were evaluated experimentally by synthesizing non-stabilized [$^{18}F$]FDG and distributing the product into a variety of geometries. A GE TRACERlab MX synthesizer (GE Healthcare, Liege, Belgium) together with TRACERlab MX$_{FDG}$ cassettes (Cat.No: PS150ME, GE), the [$^{18}F$]FDG reagents kit (Prod.No.: K-105TM, ABX, Radeberg, Germany) and Mannose Triflate plus (Prod.No.: 107.0025, ABX) were utilized for synthesis. A GE PETtrace cyclotron (GE Healthcare, Uppsala, Sweden) was used to irradiate two silver targets with 1.6 ml of $H_2^{18}O$ each (dual beam mode) for up to 90 minutes at 35 $\mu A$ for each target to generate $^{18}F$-activity of up to ca. 200 GBq. The standard [$^{18}F$]FDG synthesis protocol and cassette was modified to avoid introduction of ethanol into the process (ethanol vial in cassette replaced by empty flask). Prior to synthesis, two C18-cartridges were removed from the cassette and manually conditioned with 10 ml of ethanol, 20 ml of water, dried with air and subsequently reassembled into the cassette. A total number of ten syntheses were performed, each producing 4 ml of [$^{18}F$]FDG at activity concentrations between 4 GBq/ml and 23 GBq/ml. No ascorbic acid, ethanol nor other stabilizers were added prior, during or after synthesis. The synthesis output was examined for residual ethanol by GC-MS (6890N Network GC-System with MS 5975B, Agilent Technologies, Germany).

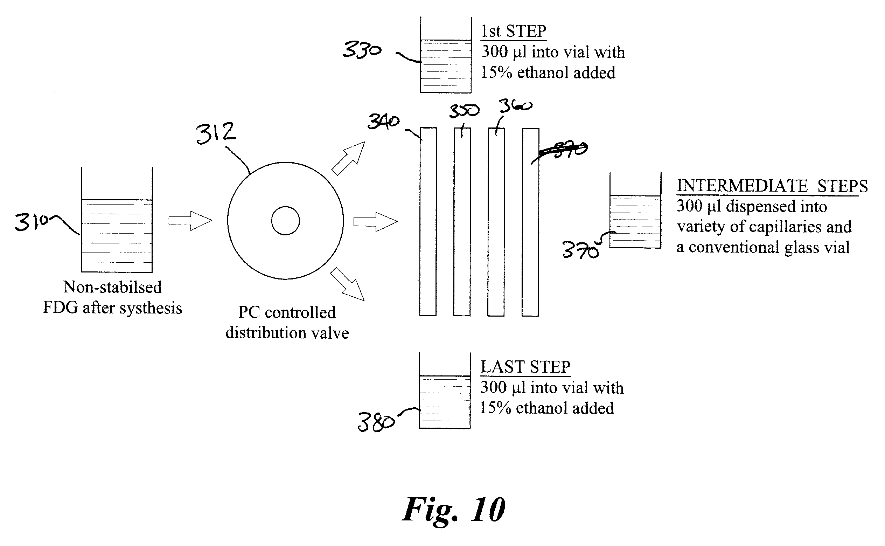

The synthesis product was then distributed using an automated experimental set-up as shown in FIG. 10. A bulk collection vial 310 was provided to receive 4mL at 4-23GBq/ml of non-stabilized [$^{18}F$]FDG dispensed from a GE TRACERLab MX (sold by GE Healthcare, Liege, BE). The contents were then directed (through conduits not shown) from vial 310 through a PC-controlled syringe pump 312 with a 10-port distribution valve to a variety of receiving containers. A first receiving vial 330 containing 15% ethanol in water solution was provided for initially receiving 300 $\mu$l [18F]FDG as a start reference. Also provided were a first, second, and third length of PEEK capillary tubes 340, 350, and 360, respectively. Capillary tubes 340, 350, and 360 had outer diameters of 1/16" and inner diameters (ie, containment geometries) of 250$\mu$m, 500$\mu$m, and 750$\mu$m, respectively. The capillary length was varied to keep a constant internal volume of 200 $\mu$l. The capillaries were wrapped around a steel core of 15 mm diameter, in a spiral with a helical pitch of 4 mm (similar to that shown in FIG. 5). The spiral wrapped capillaries were shielded by 3 mm of aluminum. The shielded spiral configuration ensured that positrons leaving the capillary had no opportunity to re-enter a segment of adjacent capillary. 200 $\mu$l of [18F]FDG was injected from bulk vial 310 into each capillary 340, 350, and 360. Additionally a 2ml glass vial 370 was provided to receive a sample of [18F]FDG at the time of dispensing into capillary tubes 340, 350 and 360. Lastly, a second receiving vial 380 containing 15% ethanol in water solution was provided for initially receiving 300 $\mu$l [18F]FDG as a stop reference.

Autoradiolysis suppression was defined as the reduction in autoradiolysis relative to a 300$\mu$l sample stored in a bulk reactor. The bulk reactor result was created from storage of non-stabilized [18F]FDG in the 2ml glass vial 370 which was part of the capillary filling routine.

The capillary filling routine included a first step and a last step where 300$\mu$l of [18F]FDG was dispensed into vials 310 and 380 with 15% ethanol solution present. These two samples were taken in order to evaluate the impact of the capillary filling time (about 20min to 30min) on the final autoradiolysis result after 14 hours, since the autoradiolysis rate is at its maximum directly after synthesis [see Fawdry, R.M., 2007, Radiolysis of 2-[18F]fluoro-2-deoxy-o-glucose (FDG) and the role of reductant stabilisers. App. Radiat. Isot. 65(11), 1192-1201; Scott et al., 2009, J. Appl. Radiat. Isot. 67 (1), 88-94].

After 14 hours, the contents of capillary tubes 340, 350, and 360 were ejected into separate vials utilizing H$_2$O and subsequently the ratio of free 18F to [18F]FDG in each capillary output solution and all bulk vial standards was determined. TLC (Polygram SIL G/UV 254; Macherey-Nagel) and an autoradiograph (Phosphor-Imager Cyclone Plus, PerkinElmer, Germany) were used to quantify the ratio of free 18F to [18F]FDG which also known as radiochemical purity (RCP).

Results:

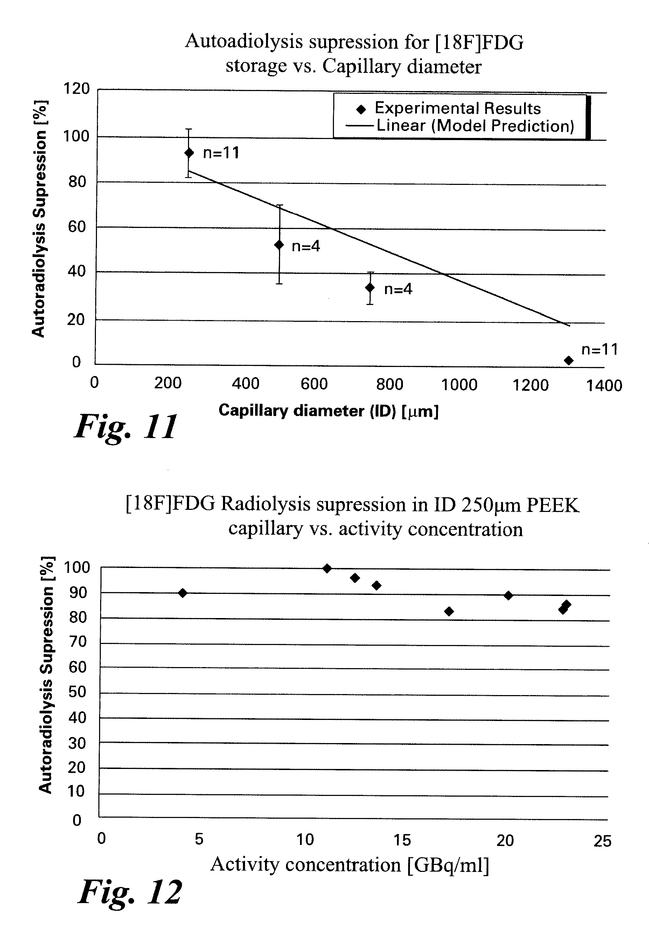

The autoradiolysis suppression for all experiments is summarized in FIG.11. It was calculated for all runs from the respective RCP of the 300$\mu$l glass vial reference sample (worst case, 0% autoradiolysis suppression after 14 hours) to the initial RCP after synthesis (best case, minimum autoradiolysis). FIG. 11 shows that an ID 250 $\mu$m capillary provides an autoradiolysis suppression of >90% whereas an increasing capillary diameter results in a reduction of the suppression factor which is in general agreement with the trend predicted by the model.

The ethanol content was measured to <2 mg/l ethanol for all experiments (detection limit of the instrument). The difference in autoradiolysis between the 300$\mu$l ethanol stabilized samples taken prior and after capillary filling was measured <1%, suggesting that the filling time had no impact on the final results.

FIG. 12 displays experimental results for the autoradiolysis suppression inside an ID 250 $\mu$m capillary (n=9) versus the respective activity concentration for each run. There are no significant trends suggesting that the results displayed in FIG. 13 are comparable for the activity concentrations chosen.

Apart from activity concentration, the results of FIG. 12 may have been affected by permanent immobilization of free 18F on the inner capillary surface. In order to investigate this aspect for the present configuration of tubing and materials, the capillaries were flushed with 400$\mu$l of water after each experimental run and the rinses were analyzed by TLC. Water has shown to be very effective for cleaning residual activities from capillary tubing. The results yielded similar ratios of 18F to [18F]FDG as the original capillary contents (variation of +/- 3%) and provided no evidence for the capillary acting as a 18F trap. However, temporary surface immobilization effects for 18F as well as permanent or temporary immobilization of free radicals may have an effect and cause the discrepancy between the model (linear correlation with capillary diameter) and experimental results (non-linear correlation with capillary diameter). According to the theoretical results (fig. 3-6) planar reactors with appropriate dimensions would show comparable results.

While only certain features of the invention have been illustrated and described herein, many modifications and changes will occur to those skilled in the art. It is, therefore, to be understood that the appended claims are intended to cover all such modifications and changes as falling within the true spirit of the invention.

**Claims**

1.   A device for containing radioisotopes comprising:

a body defining at least one confining geometry comprising;
an opening to allow fluid transfer in to said confining geometry;
a cross-section dimension below the beta(+) or beta(-) range of a radioisotope, when containing the radioisotope; and
wherein adjacent segments of the confining geometry are configured such that neighboring segments are isolated from the nearest neighbor segment such that no measurable kinetic positron energy transfer occurs between the segments when containing the radioisotope
**characterized in that** the confining geometry further comprises a fluid, wherein said fluid has a surface tension capable of encapsulating a radioisotope.

2. The device of claim 1 wherein the beta(+) or beta(-) range is about 0.01 $\mu$m to 3000 $\mu$m

3. The device of claim 1 wherein the beta(+) or beta(-) range is about 1 /lm to 2000/lm.

4. The device of claim 1 wherein the confining geometry comprises a rectangular, triangular or circular cross-section, or combinations thereof.

5. The device of claim 1 wherein the confining geometry further comprises a thin fluid film on a solid or liquid substrate.

6. The device of claim 1 wherein the confining geometry is defined by a body formed from a high positron absorption material.

7. The device of claim 6 wherein the high positron absorption material is lead, tungsten, epoxy, or a combination thereof.

8. The device of claim 1 wherein the confining geometry comprises a porous material.

9. The device of claim 1 further comprising a shielding structure positioned between the adjacent segments of the confining geometry, wherein the shielding structure comprises a positron absorption material insert, and a positron absorption fluid, or a combination thereof.

10. The device of claim 1 wherein the confining geometry is arranged in a nonlinear pattern, wherein the nonlinear pattern is a coil, coin, cone, planar rectangular, cubic meandering shape, or a combination thereof.

11. The device of claim 1 wherein the device is a reactor for radiotracer synthesis.

12. The device of claim 1 wherein the confining geometry is defined by a body comprising a substrate of a microfluidic chip assembly.

13. The device of claim 1 wherein the device is further configured for loading and unloading radioisotopes for end use applications.

14. A method of synthesizing radiopharmaceuticals, said method comprising:

adding a mixture of a radiotracer and a pharmaceutical carrier to a microfluidic reactor, said reactor comprising;
at least one confining geometry comprising;
an opening to allow fluid transfer in to said confining geometry;
a cross-section dimension below the beta(+) or beta(-) range of a radioisotope,
when containing the radioisotope; and
wherein adjacent segments of the confining geometry are configured such that neighboring segments are isolated from the nearest neighbour segment such that no measurable kinetic positron energy transfer occurs between the segments when containing the radioisotope;
flowing the mixture through the confining geometry wherein the flow rate is controlled to provide adequate mixing and reaction time; and
collecting the solution from the confining geometry wherein the sample comprises the radiopharmaceutical
**characterized in that** the confining geometry further comprises a fluid, wherein said fluid has a surface tension capable of encapsulating a radioisotope.

15. A method of storing a radiopharmaceutical, said method comprising:

adding a radiopharmaceutical to a container said container comprising;

at least one confining geometry comprising;

an opening to allow fluid transfer in to said confining geometry;

a cross-section dimension below the beta(+) or beta(-) range of a radioisotope, when containing the radioisotope; and

wherein adjacent segments of the confining geometry are configured such that neighboring segments are isolated from the nearest neighbor segment such that no measurable kinetic positron energy transfer occurs between the segments when containing the radioisotope; and

storing the radiopharmaceutical in the container

**characterized in that** the confining geometry further comprises a fluid, wherein said fluid has a surface tension capable of encapsulating a radioisotope.

**Patentansprüche**

1. Vorrichtung zum Enthalten von Radioisotopen, umfassend:

   einen Körper, der zumindest eine Einschlussgeometrie definiert, umfassend:

   eine Öffnung zum Ermöglichen von Fluidtransfer in die Einschlussgeometrie;

   eine Querschnittsabmessung unterhalb des Beta(+) oder Beta(-) Bereichs eines Radioisotops, wenn das Radioisotop enthalten ist; und

   wobei benachbarte Segmente der Einschlussgeometrie derart konfiguriert sind, dass benachbarte Segmente vom nächsten Nachbarsegment isoliert sind, sodass kein messbarer kinetischer Positronenergietransfer zwischen den Segmenten vorkommt, wenn das Radioisotop enthalten ist;

   **dadurch gekennzeichnet, dass** die Einschlussgeometrie ferner ein Fluid umfasst, wobei das Fluid eine Oberflächenspannung aufweist, die zum Einkapseln eines Radioisotops imstande ist.

2. Vorrichtung nach Anspruch 1, wobei der Beta(+) oder Beta(-) Bereich ungefähr 0,01 $\mu$m bis 3000 $\mu$m beträgt.

3. Vorrichtung nach Anspruch 1, wobei der Beta(+) oder Beta(-) Bereich ungefähr 1/lm bis 2000/lm beträgt.

4. Vorrichtung nach Anspruch 1, wobei die Einschlussgeometrie einen rechteckigen, dreieckigen oder kreisförmigen Querschnitt oder Kombinationen davon umfasst.

5. Vorrichtung nach Anspruch 1, wobei die Einschlussgeometrie ferner einen dünnen Fluidfilm auf einem festen oder flüssigen Substrat umfasst.

6. Vorrichtung nach Anspruch 1, wobei die Einschlussgeometrie durch einen Körper definiert ist, der aus einem hohen Positronabsorptionsmaterial ausgebildet ist.

7. Vorrichtung nach Anspruch 6, wobei das hohe Positronabsorptionsmaterial Blei, Wolfram, Epoxid oder eine Kombination davon ist.

8. Vorrichtung nach Anspruch 1, wobei die Einschlussgeometrie ein poröses Material umfasst.

9. Vorrichtung nach Anspruch 1, ferner umfassend eine Abschirmstruktur, die zwischen den benachbarten Segmenten der Einschlussgeometrie angeordnet ist, wobei die Abschirmstruktur einen Positronabsorptionsmaterialeinsatz und ein Positronabsorptionsfluid oder eine Kombination davon umfasst.

10. Vorrichtung nach Anspruch 1, wobei die Einschlussgeometrie in einem nichtlinearen Muster angeordnet ist, wobei das nichtlineare Muster eine Spule, eine Münze, ein Kegel, plan rechteckig, eine kubische mäandernde Form oder eine Kombination davon ist.

11. Vorrichtung nach Anspruch 1, wobei die Vorrichtung ein Reaktor für Radiotracersynthese ist.

12. Vorrichtung nach Anspruch 1, wobei die Einschlussgeometrie durch einen Körper definiert ist, der ein Substrat aus einer Mikrofluidchipbaugruppe umfasst.

**13.** Vorrichtung nach Anspruch 1, wobei die Vorrichtung ferner zum Laden und Entladen von Radioisotopen für Endzweckanwendungen konfiguriert ist.

**14.** Verfahren zum Synthetisieren von Radiopharmazeutika, das Verfahren umfassend:

Zugeben einer Mischung aus einem Radiotracer und einem pharmazeutischen Träger in einen Mikrofluidreaktor, wobei der Reaktor folgendes umfasst:

zumindest eine Einschlussgeometrie, umfassend:

eine Öffnung zum Ermöglichen von Fluidtransfer in die Einschlussgeometrie;
eine Querschnittsabmessung unterhalb des Beta(+) oder Beta(-) Bereichs eines Radioisotops, wenn das Radioisotop enthalten ist; und
wobei benachbarte Segmente der Einschlussgeometrie derart konfiguriert sind,
dass benachbarte Segmente vom nächsten Nachbarsegment isoliert sind, sodass kein messbarer kinetischer Positronenergietransfer zwischen den Segmenten vorkommt, wenn das Radioisotop enthalten ist;
Strömen der Mischung durch die Einschlussgeometrie, wobei die Fließgeschwindigkeit zum Vorsehen von angemessener Mischungs- und
Reaktionszeit gesteuert wird; und
Sammeln der Lösung aus der Einschlussgeometrie, wobei die Probe das Radiopharmazeutikum umfasst;
**dadurch gekennzeichnet, dass** die Einschlussgeometrie ferner ein Fluid umfasst,
wobei das Fluid eine Oberflächenspannung aufweist, die zum Einkapseln eines Radioisotops imstande ist.

**15.** Verfahren zum Aufbewahren eines Radiopharmazeutikums, das Verfahren umfassend:

Zugeben eines Radiopharmazeutikums in einen Behälter, wobei der Behälter folgendes umfasst:

zumindest eine Einschlussgeometrie, umfassend:

eine Öffnung zum Ermöglichen von Fluidtransfer in die Einschlussgeometrie;
eine Querschnittsabmessung unterhalb des Beta(+) oder Beta(-) Bereichs eines Radioisotops, wenn das Radioisotop enthalten ist; und
wobei benachbarte Segmente der Einschlussgeometrie derart konfiguriert sind,
dass benachbarte Segmente vom nächsten Nachbarsegment isoliert sind, sodass kein messbarer kinetischer Positronenergietransfer zwischen den Segmenten vorkommt, wenn das Radioisotop enthalten ist; und
Aufbewahren des Radiopharmazeutikums im Behälter;
**dadurch gekennzeichnet, dass** die Einschlussgeometrie ferner ein Fluid umfasst,
wobei das Fluid eine Oberflächenspannung aufweist, die zum Einkapseln eines Radioisotops imstande ist.

**Revendications**

**1.** Dispositif pour contenir des radio-isotopes comprenant :

un corps définissant au moins une géométrie de confinement comprenant :

une ouverture pour permettre le transfert d'un fluide dans ladite géométrie de confinement ;
une dimension en coupe transversale en dessous de la plage bêta(+) ou bêta(-) d'un radio-isotope, lorsqu'elle contient le radio-isotope ; et
dans lequel des segments adjacents de la géométrie de confinement sont configurés de sorte que des segments voisins soient isolés du segment voisin le plus proche de sorte qu'aucun transfert d'énergie cinétique de positons mesurable ne se produise entre les segments lorsqu'ils contiennent le radioisotope, **caractérisé en ce que** la géométrie de confinement comprend en outre un fluide, dans lequel ledit fluide a une tension superficielle capable d'encapsuler un radioisotope.

2. Dispositif selon la revendication 1, dans lequel la plage bêta(+) ou bêta(-) est d'environ 0,01 μm à 3000 μm.

3. Dispositif selon la revendication 1, dans lequel la plage bêta(+) ou bêta(-) est d'environ 1/lm à 2000/lm.

4. Dispositif selon la revendication 1, dans lequel la géométrie de confinement comprend une section transversale rectangulaire, triangulaire ou circulaire ou une de ces combinaisons.

5. Dispositif selon la revendication 1, dans lequel la géométrie de confinement comprend en outre un film de fluide mince sur un substrat solide ou liquide.

6. Dispositif selon la revendication 1, dans lequel la géométrie de confinement est définie par un corps formé d'un matériau d'absorption de positons élevée.

7. Dispositif selon la revendication 6, dans lequel le matériau d'absorption de positons élevée est le plomb, le tungstène, une résine époxyde ou une de leurs combinaisons.

8. Dispositif selon la revendication 1, dans lequel la géométrie de confinement comprend un matériau poreux.

9. Dispositif selon la revendication 1, comprenant en outre une structure de protection positionnée entre les segments adjacents de la géométrie de confinement, dans lequel la structure de protection comprend une pièce rapportée de matériau absorbant les positons et un fluide absorbant les positons ou une de leurs combinaisons.

10. Dispositif selon la revendication 1, dans lequel la géométrie de confinement est aménagée dans un motif non linéaire, dans lequel le motif non linéaire est une forme de bobine, de pièce de monnaie, de cône, de rectangle planaire et de méandres cubiques ou une de leurs combinaisons.

11. Dispositif selon la revendication 1, dans lequel le dispositif est un réacteur pour la synthèse de traceurs radioactifs.

12. Dispositif selon la revendication 1, dans lequel la géométrie de confinement est définie par un corps comprenant un substrat d'un ensemble à puce microfluidique.

13. Dispositif selon la revendication 1, dans lequel le dispositif est en outre configuré pour charger et décharger des radio-isotopes pour des applications d'utilisation finale.

14. Procédé de synthèse de produits radiopharmaceutiques, ledit procédé comprenant :

l'addition d'un mélange d'un traceur radioactif et d'un véhicule pharmaceutique à un réacteur microfluidique, ledit réacteur comprenant :

au moins une géométrie de confinement comprenant :

une ouverture pour permettre le transfert d'un fluide dans ladite géométrie de confinement ;
une dimension en coupe transversale en dessous de la plage bêta(+) ou bêta(-) d'un radio-isotope lorsqu'elle contient le radio-isotope ; et
dans lequel des segments adjacents de la géométrie de confinement sont configurés de sorte que des segments voisins soient isolés du segment voisin le plus proche de sorte qu'aucun transfert d'énergie cinétique de positons mesurable ne se produise entre les segments lorsqu'ils contiennent le radio-isotope ;
l'écoulement du mélange à travers la géométrie de confinement, dans lequel le débit est réglé pour fournir un temps de mélange et de réaction adéquat ; et
la collecte de la solution depuis la géométrie de confinement, dans lequel l'échantillon comprend le produit radiopharmaceutique,
**caractérisé en ce que** la géométrie de confinement comprend en outre un fluide, dans lequel ledit fluide a une tension superficielle capable d'encapsuler un radio-isotope.

15. Procédé de stockage d'un produit radiopharmaceutique, ledit procédé comprenant :

l'addition d'un produit radiopharmaceutique à un récipient, ledit récipient comprenant :

au moins une géométrie de confinement comprenant :

une ouverture pour permettre le transfert d'un fluide dans ladite géométrie de confinement ;
une dimension en coupe transversale en dessous de la plage bêta(+) ou bêta(-) d'un radio- isotope, lorsqu'elle contient le radio-isotope ; et
dans lequel des segments adjacents de la géométrie de confinement sont configurés de sorte que des segments voisins soient isolés du segment voisin le plus proche de sorte qu'aucun transfert d'énergie cinétique de positons mesurable ne se produise entre les segments lorsqu'ils contiennent le radio-isotope ; et
le stockage du produit radiopharmaceutique dans le récipient,
**caractérisé en ce que** la géométrie de confinement comprend en outre un fluide,
dans lequel ledit fluide a une tension superficielle capable d'encapsuler un radio-isotope.

**Fig. 1**

Radiolysis supression for[18F]FDG
Capillary vs.On-chip meander (n=4,14.9-23.1 GBq/ml)

**Fig. 2**

Fig. 3

Fig. 4

**Fig. 5**

**Fig. 6**

*Fig. 7*

*Fig. 8*

Deposited energy vs. characteristic dimension for cylindrical and planar geometry

*Fig. 9*

*Fig. 10*

## Autoadiolysis supression for [18F]FDG storage vs. Capillary diameter

*Fig. 11*

## [18F]FDG Radiolysis supression in ID 250μm PEEK capillary vs. activity concentration

*Fig. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008140616 A2

- US 7018614 B

**Non-patent literature cited in the description**

- **WORTMANN et al.** *Nuklearmedizin,* 2001, vol. 40, A106
- **KISELEV, M.Y. ; TADINO, V.** inventors. Eastern Isotopes, Inc, 2006
- **WAHL et al.** Inhibition of Autoradiolysis of Radiolabeled Monoclonal Antibodies by Cryopreservation. *Journal of Nuclear Medicine,* vol. 31 (1), 84-89
- **CHERRY S ; SORENSON J ; PHELPS M.** *Physics in Nuclear Medicine,* 2003
- **BURIOVA E. et al.** *Journal of Radioanalytical and Nuclear Chemistry,* 2005, vol. 264 (3), 595-602
- **LAPP ; ANDREWS.** Nuclear Radiation Physics. Prentice Hall, 1972, 154
- **PALMER ; BROWNELL.** *IEEE Trans. Med. Imaging,* 1992, vol. 11, 373-8

- **CHAMPION C ; LE LOIREC C.** *Phys.Med.Biol.,* 2007, vol. 52, 6605-6625
- **MACDONALD L.** *Nuclear Symposium Conference Record,* 2008
- **KATZ L ; PENFOLD A.S.** *Rev.Mod. Phys.,* 1952, vol. 24, 28
- **KOBETICH R. ; KATZ L.** *Physical Review,* 1968, vol. 170 (2
- **FAWDRY, R.M.** Radiolysis of 2-[18F]fluoro-2-deoxy-o-glucose (FDG) and the role of reductant stabilisers. *App. Radiat. Isot.,* 2007, vol. 65 (11), 1192-1201
- **SCOTT et al.** *J. Appl. Radiat. Isot.,* 2009, vol. 67 (1), 88-94